# EUROPEAN PATENT SPECIFICATION

(11) **EP 0 731 620 B1**
(45) Date of publication and mention of the grant of the patent: **02.04.2003**
(21) Application number: 96100138.5
(22) Date of filing: 08.01.1996
(51) Int. Cl.: H04Q 7/24, H04Q 7/38, H04Q 11/04

(54) **Handover in a mobile telecommunications network with ATM switch**
Weiterreichen in einem mobilen Telekommunikationssystem mit einer ATM-Vermittlungsstelle
Transfert dans un réseau de télécommunication mobile avec commutateur ATM

(30) Priority: 07.03.1995 GB 9504491
(43) Date of publication of application: 11.09.1996
(73) Proprietor: ROKE MANOR RESEARCH LIMITED, Romsey, Hampshire, SO51 0ZN (GB)
(72) Inventor: McTiffin, Michael John, Winchester, Hampshire SO22 5LN (GB)
(74) Representative: Allen, Derek

(56) References cited:
- GB-A- 2 268 360

## Description

The present invention relates to mobile telecommunications networks.

In such networks mobile handover can lead to the connections in the fixed network infrastructure being non optimum, resulting in the wasteful use of network resources but optimisation of the network can cause breaks in transmission with the consequent corruption of user data. Future mobile terminals may be supported by networks using Asynchronous Transfer Mode transmission and switching and will incorporate broadband switching nodes.

An aim of the present invention is to use the facilities incorporated into the broadband switching nodes to enable network optimisation without the corruption of user data.

According to the present invention there is provided a mobile telecommunications network comprising at least one mobile terminal arranged to communicate via a radio medium to at least a first and a second base station, said first base station being connected to a first mobile network interface unit which is connected to a switching node by way of a first channel, said second base station being connected to a second mobile network interface unit which is connected to the switching node by way of a second channel, said switching node being connected to the mobile telecommunications network by way of a third channel, said first and second network interface units being connected together by a fourth channel over which information is passed between said first and second mobile network interface units, characterised in that said switching node comprises an asynchronous transfer mode switching means, including a first set of marker cell insertion means and marker cell detection means, and each mobile network interface unit includes a second set of marker cell insertion means and marker cell detection means and selection means, and whereby said marker cell detection and insertion means are arranged to control the operation of the asynchronous transfer mode switching means and whereby said selection means are arranged to enable different connections to be configured between said channels.

The invention will now be described with reference to the accompanying drawings in which,
FIGURE 1 shows a block diagram of part of a mobile telecommunications network,
FIGURE 2a shows a block diagram of a mobile transmitting via a base station to a first mobile network interface unit,
FIGURE 2b shows a block diagram of a mobile handing over to a base station on a second mobile network interface unit,
FIGURE 2c shows a block diagram of a network re-configured to remove a communication path via the first mobile network interface unit,
FIGURE 3 shows a block diagram of a network for optimisation of a downlink,
FIGURE 4 shows a flow chart of the operation of a mobile network interface unit where optimisation of a downlink is being performed,
FIGURE 5 shows a block diagram of a network being optimised in respect of an uplink,
FIGURE 6 shows the optimisation protocol,
FIGURE 7 shows a block diagram of a number of mobile network interface units being connected to different broadband switching nodes, where one node has a common point, and,
FIGURE 8 shows a block diagram of a plurality of mobile network interface units being connected to different broadband switching nodes, and a third broadband switching node providing a common point.

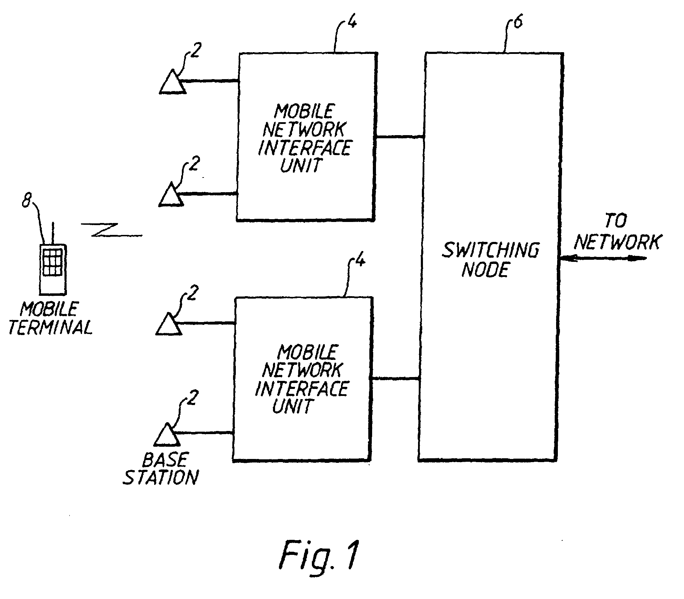

Referring to Figure 1, typically the network part of the mobile system will consist of at least one mobile 8 arranged to communicate with a base station 2 connected to mobile network interface units 4 (MNIUs) which in turn are connected to a switching node 6. AnMNIU performs those specialised network functions required by a mobile system while the switching node performs call related functions as may be expected of a normal local exchange or end office. A particularMNIU is the point of interconnection between the mobile network and the fixed network for as long as a call is being handled by one of the base stations in its area of responsibility.

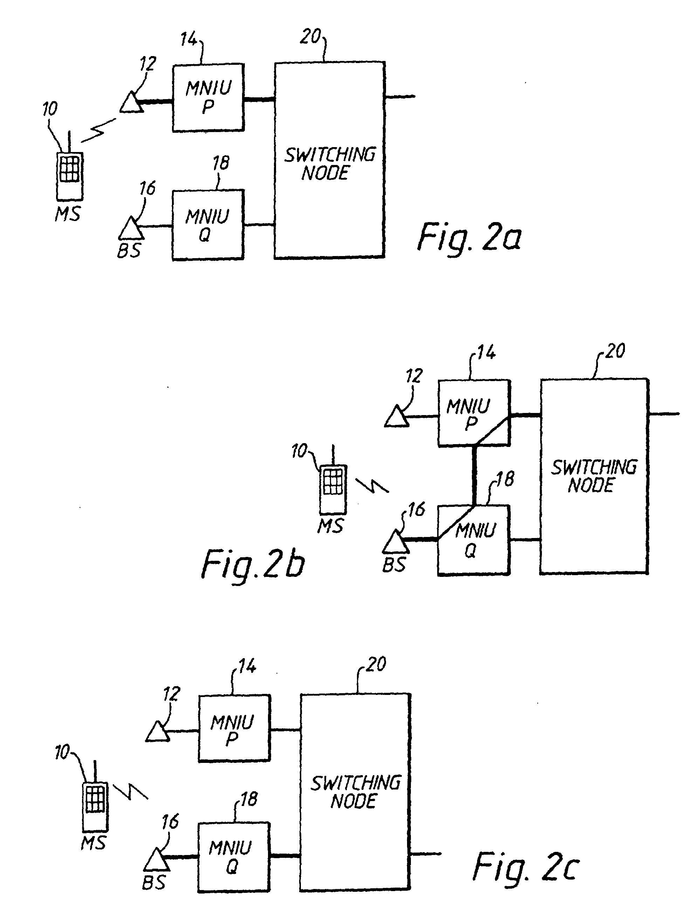

When a mobile hands over between base stations parented on different MNJUs there is a need to extend the connection within the fixed network. With reference to Figure 2a, the mobile 10 is assumed initially to be transmitting through a base station 12 parented on theMNIU p 14. When it hands over to a base station 16 parented on the MNIU Q 18 the principles of copending UK patent publication numbers GB-A-2 268 360 and GB-A-2 288 950 can be used to forward the connection from theMNIU Q 18 to the MNIU P 14 as shown in Figure 2b. However this will result in the use of additional network resources which will be released if the path between the MNIU and the switching node 20 is optimised to have the configuration shown in Figure 2c.-Unless special measures are taken optimisation will cause breaks in transmission which will result in corruption of the data passing over the connection.

Future mobile terminals may be supported by networks using Asynchronous, Transfer Mode (ATM) transmission. Such networks subdivide the data to be transmitted over the network into small packets of data called cells. These consist offorty eight octets of user information and five octets of header information. The switching nodes within the ATM networks, here referred to as broadband switching nodes, can be expected to contain an ATM switch with a cell broadcast facility and associated peripheral devices to perform egress shaping. Egress shaping is a means of regulating the flow of traffic and uses buffering as described in co-pending UK patent publication number GB-A-2 288 097 and European patent publication number EP-A-0 660 557.

The following description applies to optimisation of a single connection, but it will be appreciated that the invention may be applied to multiple connections.

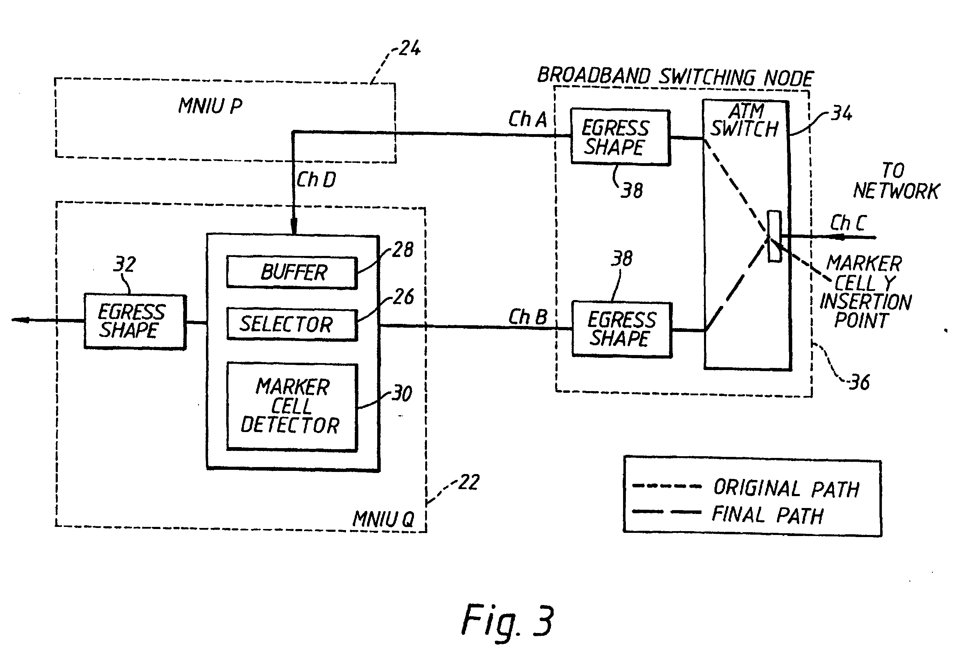

The operation of optimisation of the downlink is as shown with respect to Figure 3. Initially downlink information from the network is routed to the MNIU Q22 via the MNIU p 24 using channels A and D and only the switch connection C to A is present. When optimisation is initiated, the MNIU Q22 inserts a selector 26 in the connection. This can be done without losing data since theMNIU Q22 can monitor cells and do this between cells. The broadcast facility of the ATM switch is used to make a unidirectional connection from channel C to channel B in parallel with the connection between channel C and channel A, thus causing information to be sent to the MNIU Q22 as well as via the MNIU P 24. The selector 26 at the MNIU Q22 continues to send the information stream arriving on channel D to the base station. TheMNIU Q22 includes a buffer 28, a marker cell detector 30, and an egress shaping circuit 32.

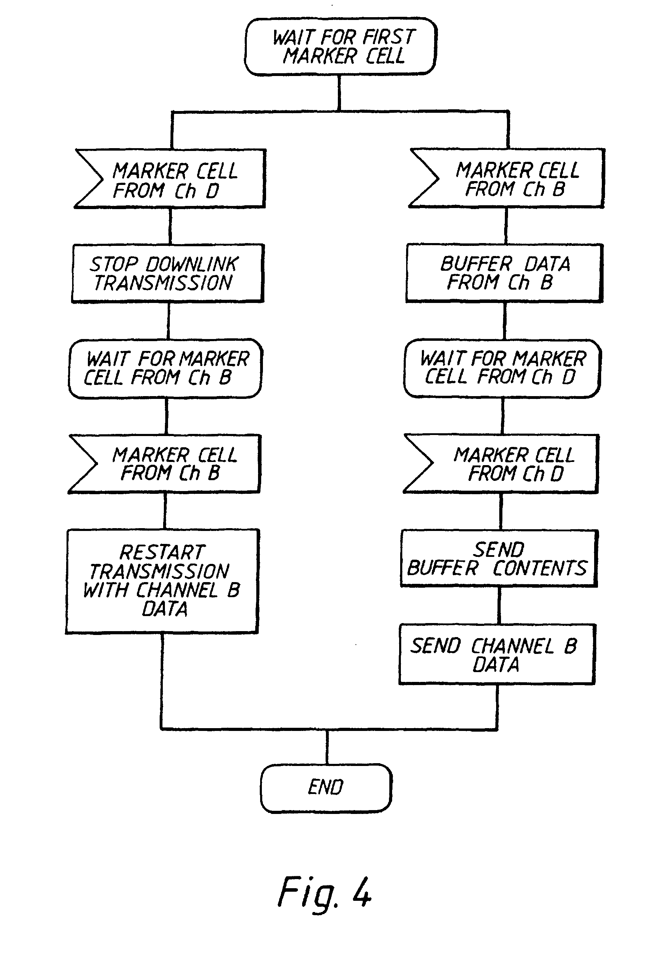

The ATM switch 34 contained in the broadband switching node 36 is then caused to insert a Marker Cell (Y) simultaneously into both paths across the switch, this could be a special Resource Management cell, and these will both arrive at the MNIU Q22 in due course. However the delays through the broadband switching node. 36 can vary significantily especially where egress shaping circuits 32 are used and the difference in the path delays between the broadband switching node 36 and the two MNILJs 22, 24 can also be large. Thus it cannot be determined in advance which marker cell will arrive first. To prevent data loss or repetition, the following algorithm can be used at the selector 26 as shown with reference to Figure 4.

If the marker cell arrives over channel D first, transmission to the base station is stopped until the marker cell transmitted over channel B arrives. Transmission is then restarted using data arriving over channel B.

If the marker cell over channel B arrives first, the data transmission path is not changed and data via channel D continues to be sent to the base station. However data arriving over channel B is buffered at the MNIU Quntil the marker cell arrives on channel D whereupon data from channel D is no longer sent to the base station. Instead, the buffered data is transmitted followed by data arriving over channel B.

The path length will usually shorten during optimisation resulting in an effective burst of user data. Also, downlink data can be buffered at the MNIU. To stop these factors causing the data rate over the air interface to exceed the allocated capacity or the rate expected by the user terminal, some egress shaping is required at theMNIU, in the form of an egress shaping circuit 32.

Following optimisation, the connection between C and A is released.

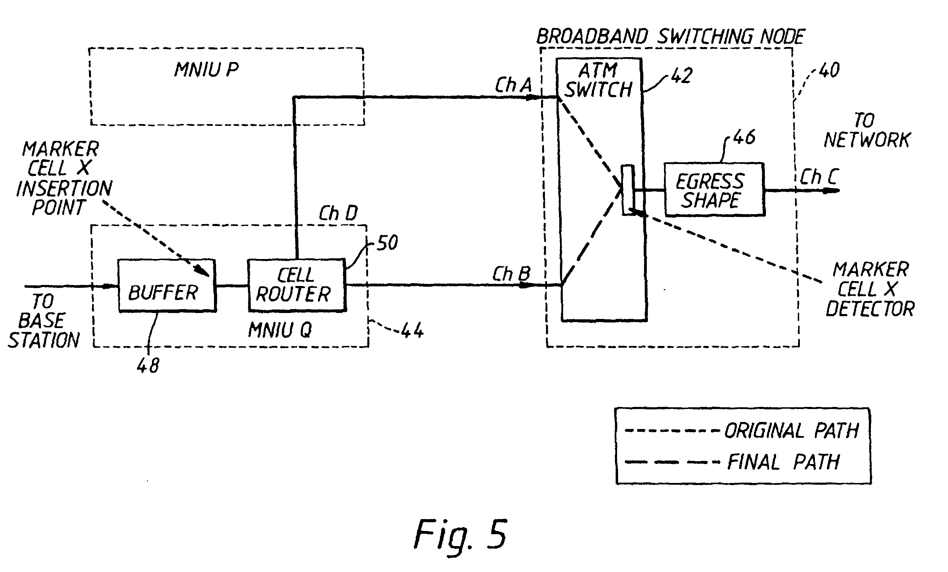

Considering now, optimisation of the uplink, with reference to Figure 5, initially the connection through the broadband switching node 40 is between channels A and C. When optimisation is initiated the MNJU Q44 stops sending user data towards the broadband switching node 40 and inserts a Marker Cell (X) into the path using the ATM switch 42. It buffers subsequent data arriving from the base station (the buffer can be inserted during an inter cell interval thus avoiding cell loss).

When the marker cell reaches channel C at the ATM switch it causes the switch to insert a second Marker Cell (Y) in the return path, as described with reference to the downlink, and is the same marker cell as used for downlink optimisation. When the first copy of this marker cell arrives at the MNIU Q44 it is certain that the broadband switching node input buffers and any buffers internal to the ATM switch have been flushed, and that changing the switch paths cannot cause data loss. The egress shaping circuit 46 for channel C is unaffected and any cells buffered here are not lost. The ATM switch paths can thus be re-configured safely and channel C is connected to channel B rather than channel A. The MNIU Q44 then restarts transmission over channel B and uplink optimisation is complete.

It is assumed that egress shaping will beprovided in the broadband switching node thus any burstiness in data resulting from the optimisation can be smoothed out there. The connection between channel B and channel D is made via a cell router 50, contained in the MNIU 44. A buffer 48 is so provided prior to the cell router 50 and is used as a marker cell X insertion point.

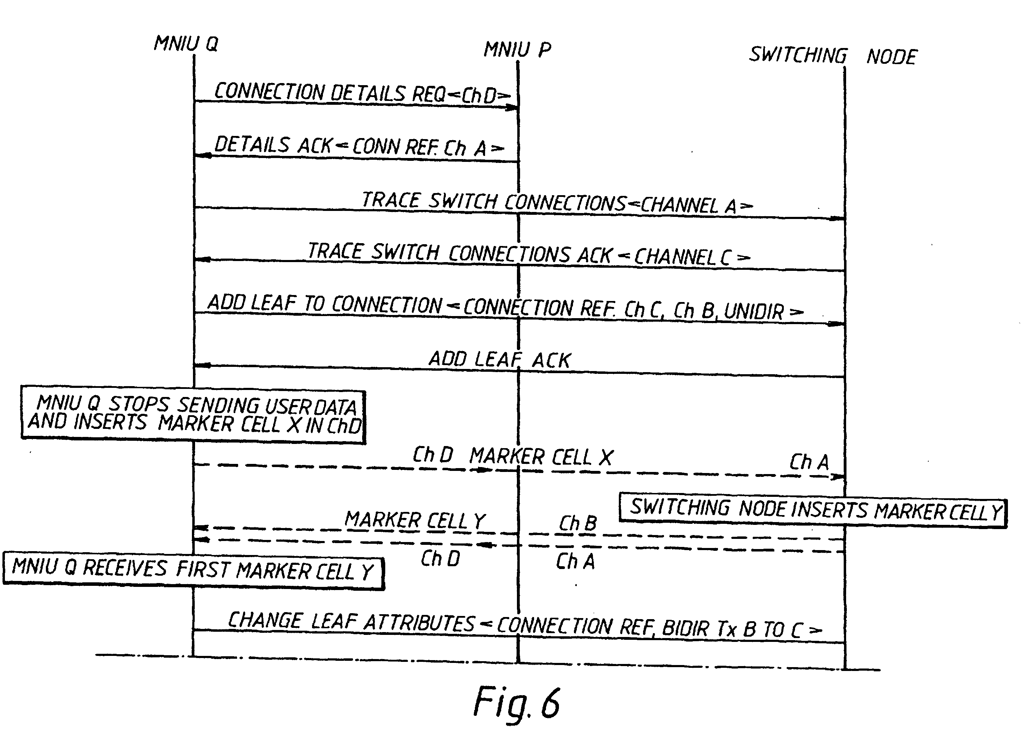

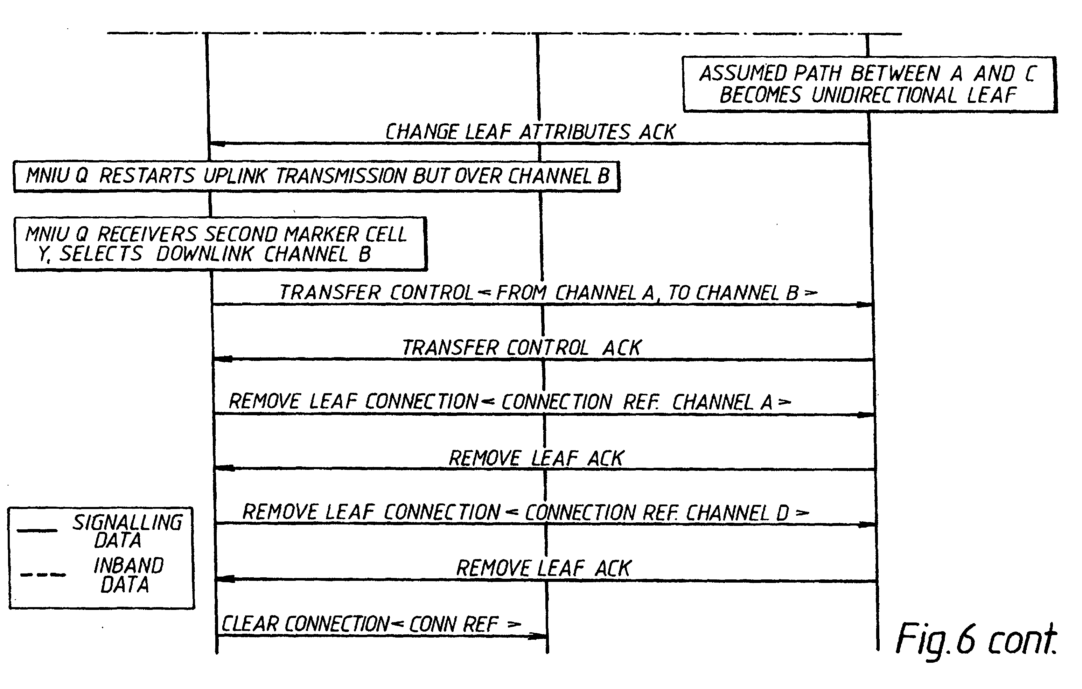

The optimisation protocol will now be discussed. Referring to Figure 6, the MNIU Qstarts off by requesting details of the connection path from the MNIU P and from the broadband switching node. The MNIU Qthen requests the broadband switching node to set up a monitor path from channel C to channel B. The MNIU Q then inserts a Marker Cell (X) into channel D which causes the broadband switching node to insert a Marker Cell (Y) into channels A and B.

On receipt of the first Marker Cell (Y), the MNIU Q requests the broadband switching node to make the connection between channels B and C bi-directional. It is assumed that this would automatically cause the path between C and A to become unidirectional and be treated as a leaf of a multicast tree. When the MNIU Q knows the switch has re-configured it starts transmitting the buffered data on channel B followed by the data received from the base station.

Following the receipt of both the Marker Cells (Y), MNIU Q will change over to transmitting cells received on channel B to the base station in accordance with the algorithm given in Figure 4. Whereupon it causes the broadband switching node to transfer control from channel A to channel B and requests the path between channels A and C to be cleared. Finally MNIU P is instructed to clear the connection between channels D and A.

It will be appreciated by those skilled in the various alternative embodiments are possible which fall within the scope of the present invention for example, where base stations are connected directly to a broadband switching node, the principles of the above can be used to prevent data loss during mobile handover. The base station or mobile terminal would then perform the functions executed by theMNIU in the above.

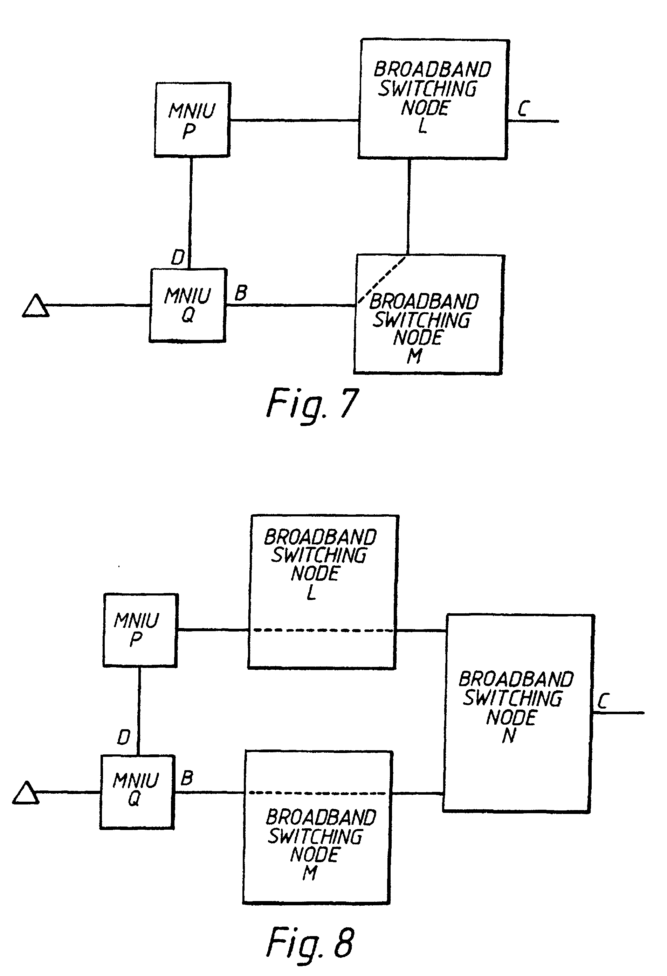

When the MNIUs P and Q are attached to different broadband switching nodes as shown in Figures 7 and 8 the same principles can be applied. The protocols of Figure 6 would operate between the MNLUs and the node interfacing to a circuit connected on line C (ie the point where the two paths diverge). Signaling information and user data would be passed transparently between the MNIUs and this node (ie transparently through broadband node M in Figure 7 and nodes L and M in Figure 8. However there would be a modification to the early part of the protocol to enable the connection trace to be extended.

Typically, the circuit connected to line C could be the point where the fixed network connection first interfaces to a broadband switching node within the mobile network but it could be the broadband switching node closest to the remote user terminal.

## Claims

1. A mobile telecommunications network comprising at least one mobile terminal (8) arranged to communicate via a radio medium to at least a first and a second base station (12), said first base station being connected to a first mobile network interface unit (22) which is connected to a switching node (20) by way of a first channel, said second base station (16) being connected to a second mobile network interface unit (24) which is connected to the switching node (20) by way of a second channel, said switching node being connected to the mobile telecommunications network by way of a third channel, said first and second network interface units being connected together by a fourth channel over which information is passed between said first and second mobile network interface units, **characterised in that** said switching node comprises an asynchronous transfer mode switching means, including a first set of marker cell insertion means and marker cell detection means (30), and each mobile network interface unit includes a second set of marker cell insertion means and marker cell detection means and selection means, and whereby said marker cell detection and insertion means are arranged to control the operation of the asynchronous transfer mode switching means and whereby said selection means are arranged to enable different connections to be configured between said channels.

2. A mobile telecommunications network as claimed in claim 1, wherein, in operation, one of said mobile network interface units (14) is arranged to request details of a connection path from the other mobile network interface unit (18) and from the switching node (20), said one mobile network interface unit is arranged to request the switching node to set up a monitor path from said third channel to said second channel, said one mobile network interface unit is arranged to insert a marker cell into said fourth channel and causes said switching node to insert a marker cell in to the first and second channels, and on receipt of this marker cell, said one mobile network interface unit is arranged to request the switching node to make the connection between the second and third channels bi-directional, and when said one mobile network interface unit is aware that said connection is configured it starts transmitting data on the second channel followed by data received from said base station, and upon receipt of both said marker cells said one mobile network interface unit is caused to transmit cells received on said second channel to said base station, whereupon said switching node (20) is caused to transfer control from said first channel to said second channel and requests the path between said first and said third channels to be cleared, and said other mobile network interface unit is instructed to clear the connection between said fourth and said first channels.

3. A mobile telecommunications network as claimed in claim 1 or claim 2, wherein each mobile network interface unit (14) is connected to a different broadband switching node (20).

4. A mobile telecommunications network as claimed in any preceding claim, wherein each mobile network interface unit (14) includes a cell router (50) which directs cells via the second or the fourth channel.

5. A mobile telecommunications network as claimed in claim 4, wherein each mobile network interface unit includes buffer means (48) connected to the input of said cell router, at which point marker cells are inserted into the data stream.

## Patentansprüche

1. Ein mobiles Telekommunikationssystem bestehend aus mindestens einem mobilen Endgerät (8), das für die Kommunikation über ein Funkmedium mit mindestens einer ersten und einer zweiten Basisstation (12) ausgelegt ist, wobei die erste Basisstation an eine erste Mobilnetz-Schnittstelleneinheit (22) angeschlossen ist, die ihrerseits über einen ersten Kanal mit einem Vermittlungsknoten (20) verbunden ist; die zweite Basisstation ist an eine zweite Mobilnetz-Schnittstelleneinheit (24) angeschlossen, die über einen zweiten Kanal mit dem Vermittlungsknoten (20) verbunden ist; der Vermittlungsknoten selbst ist über einen dritten Kanal mit dem mobilen Telekommunikationsnetz verbunden; die besagten Mobilnetz-Schnittstelleneinheiten 1 und 2 sind über einen vierten Kanal miteinander verbunden, über den Informationen zwischen diesen beiden Schnittstelleneinheiten ausgetauscht werden. Die Besonderheit dieses Systems besteht nun darin, dass der Vermittlungsknoten über eine ATM-Vermittlungseinrichtung mit einem ersten Satz von Hilfsmitteln für das Einfügen und Erkennen von Marker-Zellen (30) verfügt und dass jede Mobilnetz-Schnittstelleneinheit über einen zweiten Satz von Hilfsmitteln für das Einfügen und das Erkennen von Marker-Zellen sowie über "Auswahlmittel" (Selektor) verfügt. Die genannten Hilfsmittel für das Erkennen und Einfügen von Marker-Zellen sind für die Kontrolle des Betriebs der ATM-Vermittlungseinrichtung ausgelegt und die besagten Auswahlmittel ermöglichen die Einrichtung verschiedener Verbindungen zwischen den besagten Kanälen.

2. Ein mobiles Telekommunikationssystem gemäß Anspruch 1, in dem - im Betriebszustand - eine der genannten Mobilnetz-Schnittstelleneinheiten (14) dafür ausgelegt ist, Detaildaten eines Verbindungspfads von der anderen Mobilnetz-Schnittstelleneinheit (18) sowie von dem Vermittlungsknoten (20) abzurufen und ferner den Vermittlungsknoten anzuweisen, einen Überwachungspfad von dem genannten dritten Kanal zu dem genannten zweiten Kanal einzurichten. Diese Mobilnetz-Schnittstelleneinheit hat nun die Aufgabe, eine Marker-Zelle in den vierten Kanal einzufügen, was den Vermittlungsknoten veranlasst, seinerseits ebenfalls eine Marker-Zelle in den ersten und den zweiten Kanal einzufügen; bei Empfang dieser Marker-Zelle erhält die besagte Mobilnetz-Schnittstelleneinheit die Aufgabe, den Vermittlungsknoten anzuweisen, eine bidirektionale Verbindung zwischen dem zweiten und dem dritten Kanal einzurichten. Erkennt die Mobilnetz-Schnittstelleneinheit, dass diese Verbindung hergestellt wurde, beginnt sie mit der Übermittlung von Daten auf den zweiten Kanal, gefolgt von Daten, die von der Basisstation empfangen wurden; bei Empfang der beiden Marker-Zellen wird die Mobilnetz-Schnittstelleneinheit veranlasst, auf dem zweiten Kanal empfangene Zellen an die Basisstation zu übermitteln, was den Vermittlungsknoten (20) veranlasst, die Kontrolle von dem ersten Kanal an den besagten zweiten Kanal zu übergeben und die Freigabe des Pfads zwischen dem ersten und dem dritten Kanal anzufordern. Die andere Mobilnetz-Schnittstelleneinheit wird in diesem Fall angewiesen, die Verbindung zwischen dem vierten und dem ersten Kanal auszulösen.

3. Ein mobiles Telekommunikationssystem gemäß Anspruch 1 oder Anspruch 2, in dem jede Mobilnetz-Schnittstelleneinheit (14) mit einem anderen Breitband-Vermittlungsknoten (20) verbunden ist.

4. Ein mobiles Telekommunikationssystem gemäß einem der vorangehenden Ansprüche, in dem jede Mobilnetz-Schnittstelleneinheit (14) über einen Zellenrouter (50) verfügt, der Zellen über den zweiten oder den vierten Kanal weiterleitet.

5. Ein mobiles Telekommunikationssystem gemäß Anspruch 4, in dem jede Mobilnetz-Schnittstelleneinheit über eine Puffereinrichtung (48) verfügt, die mit dem Eingang des genannten Zellenrouters verbunden ist, wo die Marker-Zellen in den Datenstrom eingefügt werden.

## Revendications

1. Réseau de télécommunication mobile comprenant au moins un terminal mobile (8) agencé pour communiquer via un support radio vers au moins une première et une deuxième station de base (12), ladite première station de base étant connectée à une première unité d'interface de réseau mobile (22) qui est connectée à un noeud de commutation (20) par l'intermédiaire d'une première voie, ladite deuxième station de base (16) étant connectée à une deuxième unité d'interface de réseau mobile (24) qui est connectée au noeud de commutation (20) par l'intermédiaire d'une deuxième voie, ledit noeud de commutation étant connecté au réseau de télécommunication mobile par l'intermédiaire d'une troisième voie, lesdites première et deuxième unités d'interface de réseau étant connectées ensemble par une quatrième voie sur laquelle des informations transitent entre lesdites première et deuxième unités d'interface de réseau mobile, **caractérisé en ce que** ledit noeud de commutation comprend un moyen de commutation en mode de transfert asynchrone, comprenant un premier ensemble de moyens d'insertion de cellules à marqueur et de moyens de détection de cellules à marqueur (30), et chaque unité d'interface de réseau mobile comprend un deuxième ensemble de moyens d'insertion de cellules à marqueur et de moyens de détection de cellules à marqueur et de moyens de sélection, et par lequel on agence lesdits moyens de détection et d'insertion de cellules à marqueur pour commander le fonctionnement du moyen de commutation en mode de transfert asynchrone et par lequel on agence lesdits moyens de sélection pour permettre de configurer différentes connexions entre lesdites voies.

2. Réseau de télécommunication mobile selon la revendication 1, dans lequel, en fonctionnement, on agence l'une desdites unités d'interface de réseau mobile (14) pour demander des détails d'un trajet de connexion à l'autre unité d'interface de réseau mobile (18) et au noeud de commutation (20), on agence ladite première interface de réseau mobile pour demander au noeud de commutation d'établir un trajet de contrôle de ladite troisième voie à ladite deuxième voie, ladite interface de réseau mobile est agencée pour insérer une cellule à marqueur dans ladite quatrième voie et amène ledit noeud de commutation à insérer une cellule à marqueur dans les première et deuxième voies, et à la réception de cette cellule à marqueur, on agence ladite unité d'interface de réseau mobile pour demander au noeud de commutation de rendre la connexion entre les deuxième et troisième voies bidirectionnelle, et lorsque ladite unité d'interface de réseau mobile est informée que ladite connexion est configurée, elle se met à transmettre des données sur la deuxième voie, suivies de données reçues de ladite station de base, et à la réception desdites deux cellules à marqueur, ladite unité d'interface de réseau mobile est amenée à transmettre des cellules reçues sur ladite deuxième voie à ladite station de base, à la suite de quoi ledit noeud de commutation (20) est amené à transférer la commande de ladite première voie à ladite deuxième voie et demande de libérer le trajet entre lesdites première et troisième voies, et ladite autre unité d'interface de réseau mobile reçoit l'instruction de libérer la connexion entre ladite quatrième et ladite première voie.

3. Réseau de télécommunication mobile selon la revendication 1 ou la revendication 2, dans lequel on connecte chaque unité d'interface de réseau mobile (14) à un noeud de commutation à large bande différent (20).

4. Réseau de télécommunication mobile selon l'une quelconque des revendications précédentes, dans lequel chaque unité d'interface de réseau mobile (14) comprend un routeur de cellules (50) qui dirige des cellules via la deuxième ou la quatrième voie.

5. Réseau de télécommunication mobile selon la revendication 4, dans lequel chaque unité d'interface de réseau mobile comprend un moyen de tampon (48) connecté à l'entrée dudit routeur de cellules, point auquel on insère des cellules à marqueur dans le flux de données.
